# NEUE EUROPÄISCHE PATENTSCHRIFT

(11) **EP 1 207 977 B2**
(45) Veröffentlichungstag und Bekanntmachung des Hinweises auf die Entscheidung über den Einspruch: **12.01.2011**
(45) Hinweis auf die Patenterteilung: 06.04.2005
(21) Anmeldenummer: 00955952.7
(22) Anmeldetag: 16.08.2000
(51) Int. Cl.: B23K 9/10

(54) **SCHWEISSGERÄT MIT KOMMUNIKATIONSSCHNITTSTELLE UND VERFAHREN ZUM BETREIBEN DES SCHWEISSGERÄTES**
WELDING UNIT EQUIPPED WITH A COMMUNICATIONS INTERFACE AND METHOD FOR OPERATING THE WELDING UNIT
POSTE DE SOUDURE A INTERFACE DE COMMUNICATION ET PROCEDE POUR ACTIONNER LEDIT POSTE DE SOUDURE

(30) Priorität: 16.08.1999 AT 140899
(43) Veröffentlichungstag der Anmeldung: 29.05.2002
(73) Patentinhaber: Fronius International GmbH, 4643 Pettenbach (AT)
(72) Erfinder: NIEDEREDER, Franz, A-4652 Fischlham (AT); HACKL, Heinrich, A-4551 Ried/Traunkreis (AT); WITTMANN, Manfred, A-4845 Rutzenmoos (AT); LAUBER, Anton, A-4616 Weisskirchen (AT); MAIR, Peter, A-4600 Wels (AT)
(74) Vertreter: Sonn, Helmut
(86) Internationale Anmeldenummer: PCT/AT2000/000221
(87) Internationale Veröffentlichungsnummer: WO 2001/012374

(56) Entgegenhaltungen:
- EP-A- 0 825 506
- US-A- 5 808 885
- US-A- 5 850 066
- T. JOHNSON: "Implementation of computer systems for production and QA/QC in the Öresund link bridge project" 7TH INTERNATIONAL CONFERENCE ON COMPUTER TECHNOLOGY IN WELDING, 8. - 11. Juli 1997, Seiten 42-53, XP000944938

## Beschreibung

Die Erfindung betrifft ein Schweißgerät gemäß dem Oberbegriff des Anspruches 1, ein Verfahren zum Betreiben eines Schweißgerätes gemäß dem Oberbegriff des Anspruches 21.

Aus dem Dokument US 5 850 066 A bzw. US 5 808 885 ist eine Schweißsteuerung für ein Schweißgerät bekannt, bei der das Schweißgerät über ein Netzwerk Daten von einer Datenbank abrufen kann. Dabei wird das Schweißgerät über eine Kommunikationsschnittstelle, insbesondere über eine RS 232, mit einem Netzwerk, insbesondere einem Computemetzwerk, verbunden, sodaß über diese Datenverbindung entsprechende im Netzwerk befindliche Daten von einem Computer bzw. einer Datenbank heruntergeladen werden können. Nachteilig ist hierbei, daß nur ein ortsgebundener Datenaustausch mit anderen Komponenten, wie einer Datenbank oder einem Computer durchgeführt werden kann.

Weiters ist aus dem Bericht-"Implementation of computer system for production and QA/QC in the Öresund link high bridge project" - bekannt, ein Computersystem für die Qualitätssicherung und zu Dokumentationszwecken einzusetzen. Dabei werden am Computersystem, insbesondere an einem Server, beispielsweise Schweißzeichnungen, Prüfprotokolle usw. erstellt, eingegeben und gespeichert, die von einem weiteren Computer über ein Modem angerufen werden können. Nachteilig ist hierbei, daß die über den Computer übertragenen Daten nur von einem weiteren Computer abgefragt werden können, wobei anschließend von Fachpersonal entsprechend den übertragenen Daten eine Einstellung der Geräte, insbesondere der Schweißgeräte, vorgenommen werden muß.

Aus dem Dokument EP 0 825 506 A2 ist ein System bekannt, bei dem mehrere sogenannte Clients auf einen entfernt angeordneten Server über das Internet bzw. über das Intranet zugreifen und ein entsprechender Datenaustausch durchgeführt werden kann. Dabei wird vor den Endgeräten ein Server installiert, mit dem die einzelnen Endgeräte über ein Bussystem verbunden sind. Der Datentransfer erfolgt dabei derart, daß externe Geräte eine Verbindung mit dem Server aufbauen, wobei dieser anschließend mit den über das Bussystem angeschlossenen Endgeräten kommuniziert. In ähnlicher Weise ist aus US 5 805 442 die Verwendung von Internet zur Datenübertragung bei industriellen Prozessen bekannt.

Es sind bereits Verfahren zum Steuern von Schweißgeräten bzw. Stromquellen sowie eine hierzu benötigte Steuervorrichtung bekannt, bei der über eine Ein- und/oder Ausgabevorrichtung unterschiedliche Schweißparameter, wie beispielsweise ein Schweißstrom, ein Zusatzmaterial, ein Schweißverfahren usw., eingestellt werden kann, wobei aufgrund der eingestellten Schweißparameter die Steuervorrichtung eine entsprechende Steuerung der einzelnen Komponenten des Schweißgerätes durchführt, so daß ein Benutzer einen entsprechenden Schweißprozeß einleiten kann.

Der vorliegenden Erfindung liegt die Aufgabe zugrunde, ein Schweißgerät bzw. ein Verfahren zum Betreiben eines Schweißgerätes zu schaffen, welches auch aus der Ferne bedienbar ist bzw. dessen Zustandsdaten aus der Ferne ermittelt werden können und ein Femwartung durchgeführt werden kann.

Diese Aufgabe der Erfindung wird durch die Merkmale des Anspruches 1 gelöst. Vorteilhaft ist dabei, daß dem Schweißgerät aus der Ferne Daten zugeführt werden können bzw. Daten betreffend das Schweißgerät oder einen Schweißprozeß ausgelesen und weitläufig übertragen werden können. Durch die Einbindung eines aus dem Stand der Technik bekannten HTTP-Servers wird in vorteilhafter Weise erreicht, daß für die bidirektionale Datenübertragung standardisierte Softwareprogramme eingesetzt werden können und somit die Kompatibilität zu den unterschiedlichsten Verbindungsmöglichkeiten, wie den Datenbanken und den unterschiedlichsten Kommunikationspartnern bzw. Kommunikationsgeräten, gewährleistet ist. Ein weiterer Vorteil liegt darin, daß durch diese Möglichkeit der Fernübertragung von Daten auch eine Fernwartung und Software-Update's sowie der Zugriff auf externe Schweißdatenbanken, in denen spezielle Schweißverfahren bzw. Schweißeinstellungen hinterlegt sind, durchgeführt werden können und somit die hohen Kosten für eine Anreise eines Servicetechnikers eingespart werden können.

Unter Daten sind dabei auch Softwareprogramme zu verstehen, die dem Schweißgerät wahlweise zugeführt bzw. aus diesem ausgelesen werden können, wodurch ein effektives Mittel zur Umkonfiguration, zur Fehlersuche, zur Steuerung und zur Überwachung des Schweißgerätes zur Verfügung steht. Insbesondere ist es dadurch ermöglicht, am Schweißgerät für einen bevorstehenden Schweißprozeß die entsprechenden Information bzw. Daten umgehend zu erlangen, wodurch Fehlbedienungen vermieden werden können und eine Qualitäts- sowie Produktivitätsbeurteilung des Schweißprozesses in einfacher Art und Weise möglich ist. Weiters ist eine zentrale Steuerung bzw. Bedienung oder Überwachung mehrerer Schweißgeräte möglich, so daß sich der Schweißtechniker überwiegend auf seine Haupttätigkeit konzentrieren kann, da die Parametrierung bzw. Überwachung des Schweißgerätes von einer zentralen Stelle oder auch ausgehend von mehreren weitläufig entfernten Orten vorgenommen werden kann. Durch die zentrale bzw. ortsvariable Verwaltungs- und Überwachungsmöglichkeit des Schweißgerätes bzw. der Schweißprozesse ist eine Automatisierung erreicht, welche die Qualität und Produktivität von schweißtechnischen Arbeiten steigern kann. Insbesondere sind Servicedienste und Bestellvorgänge vereinfacht und wesentlich rascher durchführbar sowie eine Femwartung bzw. Ferneinstellung für das Schweißgerät ermöglicht. Zudem sind durch die Kommunikationsschnittstelle Hilfedienste online verfügbar, wodurch Arbeitsunterbrechungen kaum noch erforderlich sind bzw. ein Verlassen des Arbeitsbereiches erübrigt ist.

Es ist auch erfindungsgemäß von Vorteil, daß eine einfache Einbindung in ein bereits bestehendes bzw. aufgebautes Netzwerk möglich ist.

Durch Verwendung von Software-Bausteinen wird erreicht, dass ein Schweißgerät aufgebaut ist, welches den individuellen Bedürfnissen des Anmelders in einfacher Art und Weise angepaßt werden kann und welches für eventuelle nachfolgende Veränderungen überaus flexibel ist.

Weiters ist eine Ausführungsform nach Anspruch 2 vorteilhaft, da dadurch eine Anbindung des Schweißgerätes an weitverbreitete Datenübertragungsnetze möglich ist, wodurch nahezu jeder die Vorteile des erfindungsgemäßen Schweißgerätes nutzen kann.

Durch die Ausbildungen nach Anspruch 3 ist es möglich, Schweißprozeßdaten bzw. Einstelldaten firmenintern bzw. weltweit an ein bestimmtes Schweißgerät zu übertragen bzw. von einem bestimmten Schweißgerät zu ermitteln.

Vorteilhaft ist auch eine Ausführung nach Anspruch 4, da dadurch das Schweißgerät bei Bedarf in einfacher Art und Weise an das übergeordnete Netzwerk angedockt werden kann bzw. vom übergeordneten Netzwerk umgehungssicher getrennt werden kann.

Durch die Ausbildung nach Anspruch 6 können Schweißprozesse lückenlos überwacht bzw. umgehend beeinflußt werden. Zudem kann das Schweißgerät unter Einsatz geringer zu übertragender Datenmengen in Form von Kennungen grundlegend anders konfiguriert bzw. eingestellt werden. Diese Umkonfiguration bzw. Neueinstellung des Schweißgerätes kann durch die Übertragung geringster Datenmengen in Form von Kennungen zur Selektion bestimmter, in der Speichervorrichtung des Schweißgerätes hinterlegter Daten- bzw. Programmpakete besonders rasch, kostengünstig und sicher erfolgen.

Vorteilhaft ist dass durch die Übertragung von Daten betreffend Betriebsmittel und Verschleißteile ein Ausfall des Schweißgerätes in Folge eines Mangels an Betriebsmitteln nahezu ausgeschlossen werden kann und die Datenerhebungen weitgehend automatisiert ablaufen können, so daß eine menschliche Überwachung nahezu erübrigt werden kann.

Von Vorteil ist aber auch eine Ausbildung nach Anspruch 7 da dadurch die Qualität und Produktivität von Schweißprozessen an global verteilten Orten oder auch an einem Fertigungsstandort problemlos ermittelt werden kann und erforderlichenfalls entsprechende Maßnahmen zur Optimierung getroffen werden können.

Weiters erweist sich eine Ausbildung nach Anspruch 8 oder 9 als vorteilhaft, da dadurch eine Mehrfachverwendung der Eingabevorrichtung möglich ist und die Anwendung der Eingabevorrichtung grundsätzlich geläufig ist, so daß spezielle Schulungsmaßnahmen erübrigt werden können.

Gemäß einer Ausbildung, wie im Anspruch 10 beschrieben, wird dem Benutzer des Schweißgerätes die Bedienung erleichtert und die Überwachung des Schweißgerätes vereinfacht.

Dabei erweist sich eine Ausgestaltung nach Anspruch 10 als vorteilhaft, da dadurch das Schweißgerät relativ kostengünstig aufgebaut werden kann und jederzeit aufrüstbar ist.

Von Vorteil ist aber auch eine Ausbildung nach Anspruch 10, da dadurch das Softwareprogramm klar strukturiert sowie in einen logischen Programmteil und in die Bausteine zur Verwaltung bzw. Steuerung der Komponenten des Schweißgerätes aufgeteilt werden kann.

Durch die Ausbildung nach Anspruch 13 wird erreicht, daß einzelne Softwarebausteine jederzeit nachgeladen werden können und diese neuen Softwarebausteine in den Programmablauf ordnungsgemäß eingebunden werden.

Von Vorteil ist aber auch eine Ausbildung nach Anspruch 14, da dadurch sehr rasch auf z.B. sicherheitskritische Zustände in Abhängigkeit der jeweiligen Priorität der aufgetretenen bzw. vorliegenden Zustände reagiert werden kann.

Von Vorteil ist dabei eine Ausführung nach Anspruch 15 oder 16, da dadurch eine netzwerkoptimierte Programmiersprache gewählt ist, die unabhängig von der entsprechenden Zielhardware bzw. unabhängig vom Maschinencode der Zielhardware ist und dadurch für eine weitläufige Verbreitung ohne einer Kenntnis der Zielhardware ermöglicht ist.

Von Vorteil ist aber auch eine Ausführung nach Anspruch 17, da dadurch JAVA-Interpreter erübrigt werden und die Systemlaufzeiten verkürzt werden können.

Durch die vorteilhafte Ausbildung gemäß Anspruch 18 wird erreicht, daß das Schweißgerät nahezu uneingeschränkt mobil ist und die Verbindung zum jeweiligen Netzwerkteilnehmer bzw. Kommunikationsgerät aufgebaut bleiben kann.

Dabei erweist sich eine Ausführung nach Anspruch 19 oder 20 als vorteilhaft, da dadurch Kabelverbindungen zur Einbindung des Schweißgerätes in ein übergeordnetes Datennetzwerk erübrigt sind und funktionssichere, bewährte Komponenten in einfacher Art und Weise eingesetzt werden können.

Von Vorteil ist aber auch eine Ausführung nach Anspruch 21, da dadurch Servicedienste, Fehleranalysen, Zustandsbestimmungen, Konfigurationsänderungen und dgl. in einfacher Art und Weise durchgeführt werden können.

Die Aufgabe der Erfindung wird unabhängig davon aber auch durch ein Verfahren zum Betreiben eines Schweißgerätes gemäß den im Anspruch 22 angegebenen Merkmalen gelöst. Vorteilhaft ist dabei, daß das Schweißgerät besonders rasch und komfortabel umkonfiguriert bzw. der mit dem Schweißgerät ausgeführte Schweißprozeß oder auch der Zustand des Schweißgerätes selbst vollautomatisch überwacht werden kann. Ein weiterer Vorteil besteht darin, daß die Wartung der Datenbestände zentral vorgenommen werden kann, wodurch die abzuarbeitenden Softwarebausteine stets aktuell sind. Zudem können die jeweiligen Daten durch die dezentrale Speicherung in einfacher Art und Weise vor einem Verlust mehrfach gesichert werden.

Von Vorteil ist aber auch eine Maßnahme nach Anspruch 23, da dadurch die Belastung des Netzwerkes sehr gering gehalten und darüber hinaus die Adaptierung des Schweißgerätes besonders rasch erfolgen kann.

Von Vorteil ist auch ein Vorgehen nach Anspruch 24, da dadurch Ausfälle bzw. Stillstände des Schweißgerätes weitgehend vermieden werden können und auch der Schweißvorgang hinsichtlich Qualität und Produktivität, ausgehend von einer zentralen Stelle, bewertet werden kann.

Weiters ist erfindungsgemäß von Vorteil, dass eine bedarfsgerechte Versorgung des Schweißgerätes mit den Betriebsmitteln erfolgt, wodurch eine Lagerhaltung von Betriebsmitteln bzw. von Ersatzteilen für das Schweißgerät erübrigt ist. Darüber hinaus wird durch die Automatisierung ein hoher Zuverlässigkeitsgrad erreicht.

Von Vorteil ist auch, daß das erfindungsgemäße Schweißgerät nahezu überall und von jedermann uneingeschränkt genutzt werden können, so daß eine weitläufige Verbreitung und eine hohe Akzeptanz erzielt wird.

Die Vorteile dieser Ausbildung werden in der Beschreibung zu den Ausführungsbeispielen näher erläutert.

Die Erfindung wird im nachfolgenden anhand der in den Zeichnungen dargestellten Ausführungsbeispiele näher erläutert.

Es zeigen:
- Fig.1: ein an ein übergeordnetes Netzwerk zur drahtgebundenen Datenübertragung angekoppeltes Schweißgerät in stark vereinfachter, schematischer Darstellung;
- Fig. 2: ein Schaubild eines Schweißgerätes, in stark vereinfachter Darstellung;
- Fig. 3: ein weiteres Schaubild einer Ausführungsvariante eines Schweißgerätes, in stark vereinfachter Darstellung;
- Fig.4: mehrere untereinander vernetzte Datenverarbeitungsgeräte und Schweißgeräte an global verteilten Standorten mit Internetanbindung, in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale aus den gezeigten unterschiedlichen Ausführungsbeispielen für sich eigenständige erfindungsgemäße Lösungen bilden.

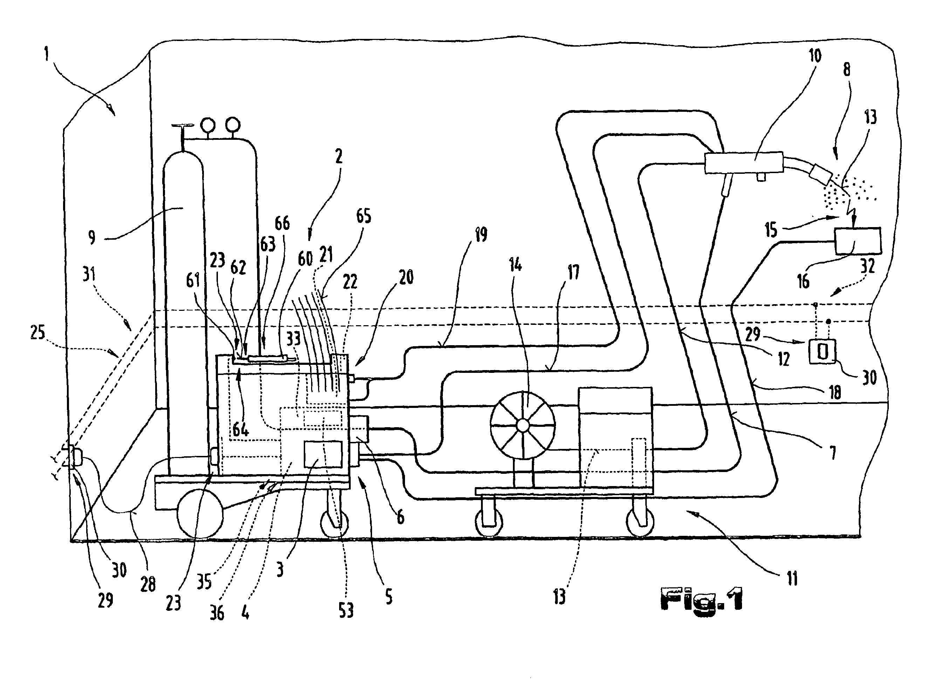

In den Fig. 1 bis 4 ist ein Schweißgerät 1 für verschiedenste Schweißverfahren, wie zum Beispiel MIG/MAG-Schweißen bzw. TIG- oder WIG-Schweißen, gezeigt. Das Schweißgerät 1 umfaßt eine Stromquelle 2 mit einem Leistungsteil 3, eine Steuer- und/oder Auswertevorrichtung 4 und einem dem Leistungsteil 3 bzw. der Steuer- und/oder Auswertevorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas wie beispielsweise Kohlendioxid, Stickstoff, Helium oder Argon und dgl., zwischen einem Gasspeicher 9 und einem Schweißbrenner 10 angeordnet ist.

Zudem wird über die Steuer- und/oder Auswertevorrichtung 4 auch noch ein Drahtvorschubgerät 11 angesteuert, wobei über eine Versorgungsleitung 12 ein Schweißdraht 13 von einer Vorratstrommel 14 in den Bereich des Schweißbrenners 10 zugeführt wird. Der Strom zum Aufbau eines Lichtbogens 15 zwischen dem Schweißdraht 13 und einem Werkstück 16 wird über eine Versorgungsleitung 17, 18 vom Leistungsteil 3 der Stromquelle 2 dem Schweißbrenner 10 bzw. dem Schweißdraht 13 zugeführt.

Selbstverständlich ist es an Stelle der dargestellten, separat angeordneten Drahtvorschubvorrichtung auch möglich, diese in das Gehäuse des Schweißgerätes 1 zu integrieren und bevorzugt eine kompakte, einstückige Baueinheit auszubilden, wie sie üblicherweise eingesetzt wird. Darüber hinaus ist es neben dem Einsatz eines auf einer Vorratstrommel 14 vorrätig gehaltenen Schweißdrahtes 13 auch möglich, Schweißgeräte 1 zur Verarbeitung von Stabelektroden erfindungsgemäß auszubilden. Weiters kann die erfindungsgemäße Ausbildung an Schweißgeräten 1 ohne abschmelzenden Elektroden, insbesondere bei Schweißgeräten 1 für das Widerstandsschweißverfahren oder Reibschweißverfahren eingesetzt werden.

Die erfindungsgemäße Ausbildung von Schweißgeräten 1 ist dabei unabhängig vom Schweißverfahren und unabhängig von der Verwendung einer Schutzgasatmosphäre.

Zum Kühlen des Schweißbrenners 10 wird dieser über einen Kühlkreislauf 19 unter Zwischenschaltung eines Strömungswächters 20 mit einem Wasserbehälter 21 verbunden, wodurch bei der Inbetriebnahme des Schweißbrenners 10 der Kühlkreislauf 19 von der Steuerund/oder Auswertevorrichtung 4 gestartet werden kann und somit eine Kühlung des Schweißbrenners 10 bzw. einer Gasdüse des Schweißbrenners 10 bewirkt wird. Selbstverständlich ist es auch möglich, daß ein externer Kühlkreislauf 19, wie er bereits aus dem Stand der Technik bekannt ist, eingesetzt wird.

Weiters weist das Schweißgerät 1 eine Ein- und/oder Ausgabevorrichtung 22 auf, über welche die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuer- und/oder Auswertevorrichtung 4 weitergeleitet. Entsprechend diesen Einstellungen werden sodann die einzelnen Komponenten des Schweißgerätes 1 angesteuert. Hierzu ist es ebenfalls möglich, daß das Schweißgerät 1 mit einer externen, bedarfsweise anschließbaren Ein- und/oder Ausgabevorrichtung 22, wie beispielsweise einem Computer, einer SPS oder einem Bedienelement usw., verbunden wird.

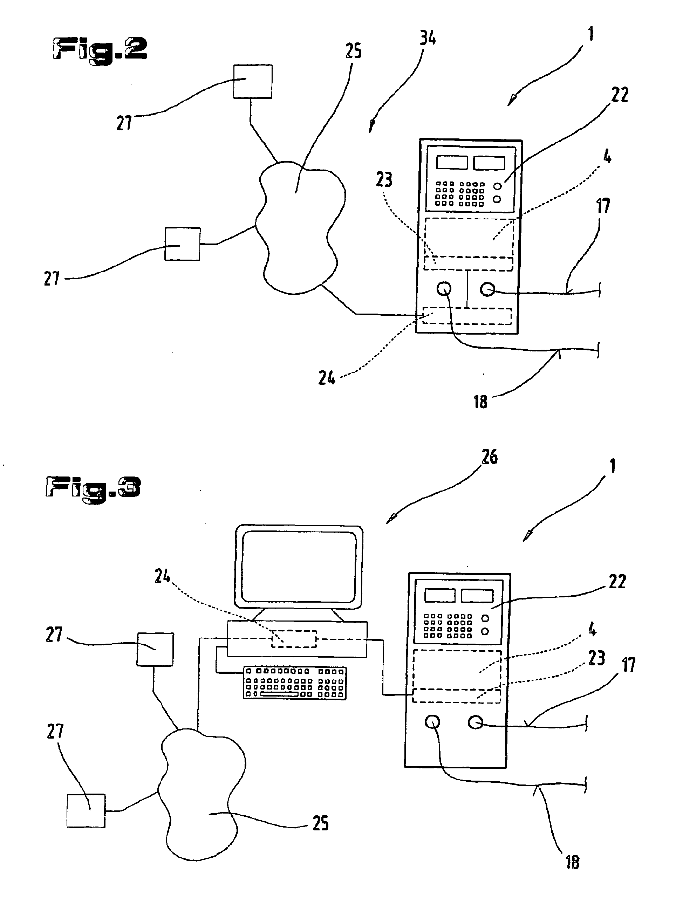

Die Steuer- und/oder Auswertevorrichtung 4 ist zumindest mit einer Kommunikationsschnittstelle 23, wie sie besser aus Fig. 2 ersichtlich ist, zu einem bidirektionalen Datenaustausch zwischen dem Schweißgerät 1 oder der Stromquelle und einem HTTP-Server 24 verbunden, d.h., daß für eine Datenübertragung an das Schweißgerät 1 oder von dem Schweißgerät 1 eine Kommunikationsschnittstelle 23 angeordnet ist, wobei diese mit einem HTTP-Server 24, eine Datenverbindung entweder drahtlos oder leitungsgebunden aufbaut. Dadurch ist es möglich, daß das Schweißgerät 1 über die Kommunikationsschnittstelle 23, zumindest zum Empfangen von Daten aus einem übergeordneten Netzwerk 25 ausgebildet ist bzw. ein Datentransfer aus dem übergeordneten Netzwerk 25 durchgeführt werden kann. Bevorzugt ist die Kommunikationsschnittstelle 23 des Schweißgerätes 1 aber derart ausgebildet, daß elektronisch verarbeitbare Daten sowohl empfangen, als auch übertragen bzw. gesendet werden können, also eine bidirektionale Datenübertragungsstrecke zwischen mehreren Netzwerkteilnehmern aufgebaut ist. Gegebenenfalls ist es auch denkbar, die Kommunikationsschnittstelle 23 ausschließlich zum Senden bzw. Übertragen von Daten des Schweißgerätes 1 an andere, örtlich distanzierte Teilnehmer im Netzwerk 25 auszubilden.

Der HTTP-Server 24, ist erfindungsgemäß in dem Schweißgerät 1 oder der Stromquelle 2 angeordnet. Eine andere Möglichkeit wire daß der Web-Server, insbesondere der HTTP-Server 24, außerhalb des Schweißgerätes 1 oder der Stromquelle 2, insbesondere in einem Rechner bzw. Personal-Computer 26 angeordnet ist, d.h., daß durch Verbinden der Kommunikationsschnittstelle 23 mit einem externen Gerät, insbesondere mit dem Personal-Computer 26, einem Laptop, eine vernetzte Rechenanlage usw., auf dem der HTTP-Server 24 angeordnet ist, eine indirekte Verbindung geschaffen wird, wie dies aus Fig. 3 ersichtlich ist. Diese Möglichkeit fällt jedoch nicht unter dem Wortlaut der Ansprüche, und ist daher nicht gegenstand der Erfindung. Eine solche indirekte Verbindung ist in der folgenden Beschreibung nur als Vergleichsbeispiel erwähnt. Der HTTP-Server 24 ist derartig ausgebildet, daß dieser eine Verbindung zu dem übergeordneten Netzwerk 25, nämlich zum INTERNET und/oder zu einem INTRANET, herstellt, so daß ein Datenaustausch mit einem von vielen weiteren HTTP-Servers 27 oder einem weiteren Kommunikationssendegerät mit dem HTTP-Server 27 durchgeführt werden kann. Dabei kann der weitere HTTP-Server 27 wiederum durch ein Schweißgerät 1 mit dem HTTP-Server 24 entsprechend den Ausführungen der Fig. 2 oder 3 oder dem unabhängigen Personal-Computer 26, gebildet sein. Durch einen derartigen Datentransfer wird in vorteilhafter Weise erreicht, daß damit beispielsweise Serviceleistungen nicht mehr Vorort durchgeführt werden müssen. Weiters können kostengünstige Anpassungen der Schweißgeräte 1, insbesondere Software-Anpassungen bzw. Software-Update's, durchgeführt werden, ohne daß dazu ein Servicetechniker Vorort anwesend sein muß.

Die Kommunikationsschnittstelle 23 des Schweißgerätes 1 ist bevorzugt durch eine standardisierte Schnittstelle zu einem üblichen Datenübertragungsnetzwerk, insbesondere zu einem drahtgebundenen Datenübertragungsnetzwerk gebildet. Die Anbindung des Schweißgerätes 1 an das übergeordnete Netzwerk 25 kann dabei über ein Netzwerkkabel 28 erfolgen, das die elektrische Verbindung zwischen dem HTTP-Server 24 und einer externen Netzwerkschnittstelle 29, insbesondere einer Netzwerkdose 30, herstellt.

Anstelle der drahtgebundenen Verbindung zwischen dem Schweißgerät 1 und zumindest einem weiteren Kommunikationssendegerät ist es auch möglich, die Datenübertragungsstrecke drahtlos aufzubauen. Die Datenübertragung kann dabei per Funk über elektromagnetische Wellen oder auch optisch, bevorzugt über Infrarotsignale, erfolgen. Bei einer optischen Datenübertragung ist die Kommunikationsschnittstelle 23 als Schnittstelle zum Senden und/oder Empfangen von Infrarotstrahlen aufgebaut, die zur Kommunikation mit einer Schnittstelle zum Senden und/oder Empfangen von Infrarotstrahlen eines entsprechend ausgebildeten Kommunikationsgerätes, insbesondere mit der Schnittstelle zum Senden und/oder Empfangen von Infrarotstrahlen eines Mobiltelefons, zusammenwirkt. Dabei ist der HTTP-Server 24 direkt in der Kommunikationsschnittstelle 23 eingebaut. Die Verbindung vom Schweißgerät 1 bzw. vom Mobiltelefon zum jeweils gewünschten Kommunikationssendegerät wird dann bevorzugt über das öffentliche Telefonnetz fortgesetzt.

Selbstverständlich ist es auch möglich, die optische Kommunikationsschnittstelle 23 des Schweißgerätes 1 mit der entsprechenden optischen Netzwerkschnittstelle 29 in Verbindung zu setzen, wobei dann die entsprechenden Daten drahtlos an die optische Netzwerkschnittstelle 29 übergeben werden und nachfolgend drahtgebunden im übergeordneten Netzwerk 25 weitergeleitet werden. Analog dazu ist die Übertragung von Daten aus dem Netzwerk 25 an das Schweißgerät 1 durchführbar. Sofern die optische Netzwerkschnittstelle 29 angeordnet ist, ist lediglich sicher zu stellen, daß eine Sichtverbindung zwischen der optischen Kommunikationsschnittstelle 23 des Schweißgerätes 1 und der optischen Netzwerkschnittstelle 29 vorliegt, was beispielsweise durch entsprechende Positionierung des Schweißgerätes 1 erzielt werden kann.

Bei einer Datenübertragung auf optischem und elektromagnetischem Weg über ein Mobiltelefon mit einer Schnittstelle zum Senden und/oder Empfangen von Infrarotstrahlen ist es lediglich erforderlich, die Wählverbindung zum gewünschten Kommunikationssendegerät herzustellen und die Schnittstelle zum Senden und/oder Empfangen von Infrarotstrahlen des Mobiltelefones mit der optischen Kommunikationsschnittstelle 23 am Schweißgerät 1 in Verbindung zu setzen und den gewünschten Verbindungsaufbau einzuleiten.

Das übergeordnete Netzwerk 25 kann dabei durch ein elektrisches Netzwerk 25 oder in vorteilhafter Weise aufgrund der hohen Datenübertragungsraten und geringen Störanfälligkeit gegen elektromagnetische Felder auch durch ein optisches Netzwerk zur Übertragung von optischen Signalen gebildet sein.

Das zur Kommunikation zwischen mehreren Netzwerkteilnehmern bzw. Kommunikationsgeräten ausgebildete Netzwerk 25 ist durch ein lokales, firmeninternes Netzwerk 31 (LAN) und/oder auch durch ein globales, standortübergreifendes Netzwerk 32 (WAN) gebildet. Dabei ist es auch möglich, das lokale Netzwerk 31 in das globale Netzwerk 32 einbindbar auszubilden bzw. die Netzwerke 31, 32 miteinander zu koppeln.

Zur Datenübertragung am lokalen Netzwerk 31 ist bevorzugt das standardisierte TCP (Transmission Protocol) bzw. das IP (Internet Protocol) - Kommunikationsprotokoll eingesetzt. Demnach ist die Kommunikationsschnittstelle 23 des Schweißgerätes 1 durch eine TCP/IP-Schnittstelle gebildet. Das lokale Netzwerk 31 ist daher durch eine INTRANET-Vernetzung oder durch ein sonstiges auf das TCP/IP-Protokoll aufbauende Netzwerk gebildet. So ist es z. B. auch möglich, daß das Netzwerk 25 durch ein ETHERNET oder ARCNET gebildet ist.

Wie nun am besten aus der Zusammenschau der Fig. 1 bis 4 zu entnehmen ist, ist das Schweißgerät 1 über die Kommunikationsschnittstelle 23 und der HTTP-Server 24, 27 entweder direkt oder indirekt über das lokale Netzwerk 31 in das globale Netzwerk 32 einbindbar. Die Kommunikationsschnittstelle 23 ist also zur Einbindung in ein INTRANET 33 und/oder direkt in ein INTERNET 34 ausgebildet. Das globale Netzwerk 32 ist durch das an sich bekannte INTERNET 34 gebildet, das eine Kommunikation nach dem TCP/IP-Protokoll mit beliebigen, weltweit verteilten, dabei jedoch gezielt adressierbaren Kommunikationsgeräten, welche alle den HTTP-Server 24, 27 aufweisen, ermöglicht.

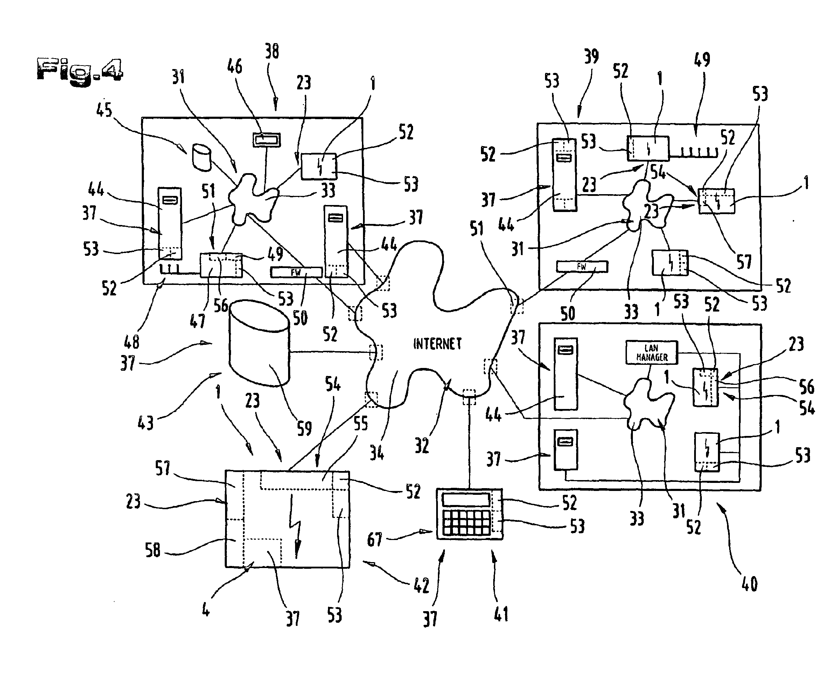

Speziell Fig. 4 stellt dabei stark vereinfacht einen möglichen Kommunikationsaufbau zwischen mehreren Schweißgeräten 1 und sonstigen Netzwerkteilnehmern bzw. sonstigen Kommunikationsgeräten dar.

Die Steuer- und/oder Auswertevorrichtung 4 des Schweißgerätes 1 ist dabei durch eine standardmäßig verfügbare Recheneinheit 35, insbesondere einen Personal-Computer 36 gebildet. Die Recheneinheit 35 bzw. der Personal-Computer 36 im Schweißgerät 1 weist dabei die standardmäßige Kommunikationsschnittstelle 23 mit dem HTTP-Server 24 zur Kommunikation mit frei wählbaren Kommunikationsgeräten, die ebenfalls den HTTP-Server 24 oder 27 aufweisen, im übergeordneten Netzwerk 25 auf.

Die verschiedenen Schweißgeräte 1 und Netzwerkteilnehmer 37 sind dabei an global verteilten Einsatzstandorten 38 bis 43 in Verwendung, wobei an den jeweiligen Einsatzstandorten 38 bis 43 auch mehrere Schweißgeräte 1 bzw. Netzwerkteilnehmer 37 untereinander kommunizieren können.

An den Einsatzstandorten 38 bis 40 ist dabei jeweils ein lokales Netzwerk 31 aufgebaut, in welches die Schweißgeräte 1 und sonstige Netzwerkteilnehmer 37 eingebunden sind und somit untereinander einen Datenaustausch vornehmen können.

Unter Netzwerkteilnehmer 37 sind dabei herkömmliche Personal-Computer 44, Datenspeichervorrichtungen 45, einfache Datensichtgeräte 46 wie z.B. Terminals und Automatisierungsgeräte 47 bzw. speicherprogrammierbare Steuerungen (SPS) zur Automation von beliebigen technischen oder industriellen Abläufen zu verstehen. Die Automatisierungsgeräte 47 weisen dabei eine Mehrzahl von Ein- und/oder Ausgängen auf, über welche der zu automatisierende Prozeß überwacht und beeinflußt werden kann. Die Verbindung zwischen dem Automatisierungsgerät 47 und den zu steuernden Einrichtungen erfolgt dabei über herkömmliche Feldbussysteme 48. Dabei ist es auch möglich, daß das Automatisierungsgerät 47 einen Schweißroboter steuert und dann der Schweißroboter das Schweißgerät 1 darstellt.

Ebenso umfaast das Schweißgerät 1 eine Sensoranordnung 49 umfassen, mit welcher relevante Daten eines laufenden Schweißprozesses erfaßbar sind und an das Schweißgerät 1 übergeben werden. Die dem Schweißgerät 1 zugeordnete Sensoreinheit kann dabei zur Erfassung der Schweißstromstärke, der Temperaturverhältnisse, der Einbrandtiefe, der charakteristischen Merkmale des Lichtbogens, der Führung des Schweißbrenners und dgl. ausgebildet sein. Diese über die Sensoranordnung 49 aufgenommenen Schweißprozeßdaten zur Beurteilung der Qualität eines Schweißprozesses bzw. zur Erfassung der aktuellen Schweißleistung werden an das Schweißgerät 1 übergeben, in diesem aufbereitet oder gegebenenfalls verarbeitet und können dann über die Kommunikationsschnittstelle 23 und dem HTTP-Server 24 an andere Netzwerkteilnehmer zur Auswertung übergeben werden bzw. von anderen Netzwerkteilnehmem 37, wie beispielsweise vom Personal-Computer 44, gezielt abgerufen werden.

Die lokalen Netzwerke 31 an den einzelnen Einsatzstandorten 38 bis 40 können dabei durch eine Datenschutzvorrichtung 50, eine sogenannte "Firewall", vor externem, unbefugtem Zugriff gesichert werden. Diese Datenschutzvorrichtung 50 ist auch dazu ausgebildet, um das Einspielen von Daten in das Netzwerk 31 bzw. in die Schweißgeräte 1 oder Netzwerkteilnehmer 37 durch unbefugte Dritte zu unterbinden.

Die Einbindung der Schweißgeräte 1 bzw. der lokalen Netzwerke 31 in das weltweite Internet 34 erfolgt über entsprechende Zugangseinrichtungen 51, insbesondere sogenannte Internet-Service-Provider.

Jedem Schweißgerät 1 bzw. jedem Netzwerkteilnehmer 37 ist dabei eine eindeutig unterscheidbare Kennung bzw. Adresse 52 zugeordnet, so daß das jeweilige Schweißgerät 1 bzw. der jeweilige Netzwerkteilnehmer 37 aus einer Mehrzahl von Schweißgeräten 1 bzw. Netzwerkteilnehmern 37 gezielt angesprochen bzw. adressiert werden kann und zusätzlich selbst eindeutig identifiziert ist, sofern Daten abgesetzt werden. Die Adresse 52 bzw. die sogenannte e-mail-Adresse, wird von Internet-Service-Providern bzw. von der jeweiligen Zugangseinrichtung 51 zum Internet 34 verwaltet.

Die Steuer- und/oder Auswertevorrichtung 4 des Schweißgerätes 1 ist bevorzugt durch eine Prozessorsteuerung, welche gemäß einem vorgegebenen Ablaufprogramm arbeitet, gebildet. Das Ablaufprogramm kann dabei aus mehreren Softwarebausteinen zusammengesetzt sein, welche insgesamt das komplette Steuerprogramm bilden. Die Steuer- und/oder Auswertevorrichtung 4 ist dabei zur zyklischen und/oder interruptgesteuerten Abarbeitung der Softwarebausteine ausgebildet.

Die von der Steuer- und/oder Auswertevorrichtung 4 abzuarbeitenden Sofwarebausteine können dabei dauerhaft oder flüchtig in einer Speichervorrichtung 53 des Schweißgerätes 1 hinterlegt sein. Die Speichervorrichtung 53 kann dabei durch Speicherbausteine der Digitaltechnik, durch einen Festplattenspeicher oder durch sonstige aus dem Stand der Technik bekannte Datenspeichervorrichtungen gebildet sein. Zusätzlich zu den abzuarbeitenden Softwarebausteinen können in der Speichervorrichtung 53 auch Prozeßdaten bzw. Zwischenergebnisse der Prozessorsteuerung und Vorgabekennwerte dauerhaft oder vorübergehend gespeichert sein.

Über die Kommunikationsschnittstelle 23 bzw. durch die Anbindung an das Netzwerk 25 ist es dann möglich, Daten bzw. Softwarebausteine aus dem Schweißgerät 1 auszulesen bzw. in das Schweißgerät 1 zu übertragen. Insbesondere können die von der Steuer- und/oder Auswertevorrichtung abzuarbeitenden Softwarebausteine durch neue, über das Netzwerk 25 übertragene Softwarebausteine ersetzt werden. Somit kann das Schweißgerät 1 nach dem Update der Softwarebausteine nach einem anderen Ablaufprogramm arbeiten. Dadurch ist es nunmehr auch möglich, daß am Schweißgerät 1 über das Netzwerk 25 eine andere oder geänderte Funktionalität eingestellt wird, sodaß eine Art Fernsteuerung bzw. Fernbedienung des Schweißgerätes 1 erreicht ist.

Dabei ist es auch möglich, daß eine Vielzahl von Softwarebausteinen bzw. Steuerprogrammen in der Speichervorrichtung 53 hinterlegt sind und anhand von über das Netzwerk 25 empfangenen Kennungen gezielt ein neues Steuerprogramm aktiviert wird, das nachfolgend von der Steuer- und/oder Auswertevorrichtung 4 abzuarbeiten ist.

Ebenso können über das Netzwerk 25 Daten-Updates in das Schweißgerät 1 übertragen werden, wobei die Einleitung dieses Updates von einem weitläufig entfernten Standort vorgenommen werden kann.

Durch Software-Updates bzw. durch die Übertragung von Kennungen ist es also möglich, die Funktionalität des Schweißgerätes 1 zu erhöhen bzw. zu reduzieren. So ist es z.B. auch möglich, daß hinsichtlich einer geforderten Funktionalität überarbeitete Softwarebausteine vom Hersteller des Schweißgerätes 1 an die jeweiligen Schweißgeräte 1 an den Kundenstandorten übertragen und in die Steuer- und/oder Auswertevorrichtung 4 des Schweißgerätes 1 eingespielt werden. Durch die Einbindung des Schweißgerätes 1 in das Netzwerk 25 kann z.B. die Leistungsfähigkeit des Schweißgerätes 1 in einfacher Art und Weise vom Hersteller erhöht werden, nachdem der entsprechende Besitzer des Schweißgerätes 1 die hierfür aufzuwendenden Kosten beglichen hat. Vielfach kann nämlich die Leistungsfähigkeit einfach durch eine Anpassung des Steuerprogrammes verändert werden, sodaß mit einem bestimmten Hardwareaufbau verschiedene Leistungsklassen realisiert werden, wodurch beim Hersteller in vorteilhafter Art und Weise die Produktvielfalt ohne Einbußen bei der Typenvielfalt reduziert werden kann.

Ebenso ist es dadurch ermöglicht, Fernwartungen an global verteilten Schweißgeräten 1, ausgehend von einer zentralen Stelle bzw. von einem Fertigungsstandort der Schweißgeräte 1, vorzunehmen. Insbesondere ist auch eine Ferndiagnose, eine Fehlersuche und ein Service bzw. eine Zustandsbestimmung des Schweißgerätes 1 aus der Ferne durchführbar. Somit bleibt die Einsatzfähigkeit des Schweißgerätes 1, bzw. die Qualität der mit dem Schweißgerät 1 ausgeführten Schweißprozesse gesichert und Ausfälle des Schweißgerätes 1 können vermieden werden, da Mängel frühzeitig erkannt werden.

Andererseits ist es aber auch möglich, sämtliche Daten zu einzelnen Schweißparametern oder Kennungen für eine individuelle Konfiguration des Schweißgerätes 1 über das Netzwerk 25 und die Kommunikationsschnittstelle 23 zuzuführen bzw. für eine Kontrolle der Schweißvorgänge diese Daten vom Schweißgerät 1 auszulesen. So ist es möglich, daß Daten betreffend den Betrieb des Schweißgerätes 1, wie z.B. die Verwendungsdauer, die Verwendungszeitpunkte, die Schweißeinstellungen oder dgl., von einem der Netzwerkteilnehmer 37 abfragbar sind bzw. diese Daten ausgehend vom Schweißgerät 1 automatisch an andere Netzwerkteilnehmer 37 für eine Verarbeitung bzw. Auswertung übertragen werden.

Ebenso werden über die dem Schweißgerät 1 zugeordnete Sensoranordnung 49 Daten betreffend die Betriebsmittel des Schweißgerätes 1, wie z.B. die Menge und/oder die Art der Schweißelektrode, des abschmelzenden Schweißdrahtes 13, des verwendeten Schutzgases und dgl., über das Netzwerk 25 und die Kommunikationsschnittstelle 23 abgefragt bzw. ausgehend von der Steuer- und/oder Auswertevorrichtung 4 automatisch an weitere Netzwerkteilnehmer 37 zur Auswertung und zur Entscheidung der Einleitung von Maßnahmen übertragen. Ebenso werden über die Sensoranordnung 49 Daten betreffend Verschleißteile des Schweißgerätes 1, wie z.B. der Kontaktbuchse, der Gasdüse oder dgl. über das Netzwerk 25 gezielt abgefragt bzw. auch zyklisch oder erst vor Erreichen eines kritischen Zustandes an zumindest einen weiteren Netzwerkteilnehmer 37 übertragen, sodaß von diesem die entsprechenden Maßnahmen gesetzt werden können.

Durch die Vernetzung des Schweißgerätes 1 und durch die Zuordnung der Sensoranordnung 49 ist es auch möglich, daß von der Steuer- und/oder Auswertevorrichtung 4 Serviceempfehlungen oder Soll-Servicezeitpunkte abgesetzt werden. Darüber hinaus sind vom Schweißgerät 1 automatisch Meldungen über den Betriebsmittelstand oder auch konkrete Betriebsmittelbestellungen an bestimmte Netzwerkteilnehmer 37, wie z.B. an einen Gas- oder Schweißdrahtlieferanten, absetzbar.

Die Übertragung der Daten bzw. Softwarebausteine vom Schweißgerät 1 zum jeweiligen Netzwerkteilnehmer 37 mit einer bestimmten Adresse 52 bzw. umgekehrt erfolgt über das INTRANET 33 innerhalb standortbezogener Bereiche, bzw. weltweit über das INTERNET 34.

Zur Ankopplung des Schweißgerätes 1 an das übergeordnete INTERNET 34 weist die Steuer- und/oder Auswertevorrichtung 4 bzw. die demgemäße Recheneinheit 35 eine standardisierte Kommunikationsschnittstelle 23 auf. Über diese standardisierte Kommunikationsschnittstelle 23 ist das Schweißgerät 1 mit einer Ankoppelvorrichtung 54, z.B. in Art eines internen Modems 55 oder auch in Art einer geeigneten Netzwerkkarte 56, verbunden.

Über diese im Schweißgerät 1 vorgesehene Ankoppelvorrichtung 54 in Form des Modems 55 bzw. der Netzwerkkarte 56 ist der Aufbau einer externen Kommunikation über das Netzwerk 25 ermöglicht. Durch die im Schweißgerät 1 vorgesehene Ankoppelvorrichtung 54 in Form des Modems 55 zum Aufbau einer externen Kommunikation bzw. zur Herstellung einer Wählverbindung im Telefonnetz, ist eine zuverlässige und bewährte Datenübertragung bzw. ein weit verbreiteter Datenaustausch ermöglicht.

Zur Bedienung und/oder Kontrolle des Schweißgerätes 1 ist diesem die Ein- und/oder Ausgabevorrichtung 22 zugeordnet, wobei vor allem eine Eingabevorrichtung 57 vorgesehen ist und eine Ausgabevorrichtung 58 optional vorhanden sein kann. Die Bedienung über die Einund/oder Ausgabevorrichtung 22 kann dabei Menü gesteuert erfolgen, sodaß der Benutzer für einen Datentransfer über das INTERNET 34 oder INTRANET 33 keine besonderen Vorkenntnisse aufweisen muß.

Mittels der Eingabevorrichtung 57 ist eine Bedienung des Schweißgerätes 1 und/oder eine Navigation und Selektion von bestimmten Daten aus dem Datenbestand einer Wissensdatenbank 59 für die Schweißtechnik möglich. Diese Wissensdatenbank 59 kann dabei Teil eines Filesystems eines weitläufig entfernten Datenbankbetreibers oder auch die firmeninteme Wissensdatenbank 59 mit Daten, vor allem aus der Schweißtechnik, sein.

Die Eingabevorrichtung 57 kann dabei durch standardmäßig verfügbare Komponenten, wie z.B. durch eine Tastatur, ein Zeigegerät, ein knüppelartiges Steuerorgan oder durch mehrere Bedienelemente in Form von Dreh- und/oder Schiebeelementen mit Tast- und/oder Schaltfunktion gebildet sein.

Die optionale Ausgabevorrichtung 58 kann ebenso durch standardmäßige Komponenten, wie z.B. durch einen Bildschirm, ein Display oder dgl., gebildet sein. Über diese Ausgabevorrichtung 58 sind die aus dem übergeordneten Netzwerk 25 abgerufenen Daten und/oder die von der Steuer- und/oder Auswertevorrichtung 4 verwalteten und/oder die über die Eingabevorrichtung 57 eingegebenen Daten visualisierbar. Zusätzlich oder alternativ kann auch die akustische Ausgabevorrichtung 58 vorgesehen sein, über welche die betreffenden Daten bzw. Zustände signalisierbar sind.

Vor allem die Verwendung des Personal-Computers 36 als Steuer- und/oder Auswertevorrichtung 4 des Schweißgerätes 1 hat den Vorteil, daß standardmäßige Ein- und/oder Ausgabevorrichtungen 22, wie z.B. Bildschirme und Tastaturen, verwendet werden können.

Ebenso kann dem Schweißgerät 1 eine kombinierte Ein- und Ausgabevorrichtung 22, z.B. in Art eines Touch-Screen, zugeordnet werden, wodurch die Bedienung bzw. Einstellung des Schweißgerätes 1 für den Schweißtechniker wesentlich erleichtert wird und die Platzanforderungen gering gehalten werden können.

Die Steuer- und/oder Auswertevorrichtung 4 bzw. der Personal-Computer 36 des Schweißgerätes 1 weist ein Softwarebaustein-Ablaufsystem bzw. ein entsprechendes Betriebssystem auf. Die von der Recheneinheit 35 bzw. vom Personal-Computer 36 des Schweißgerätes 1 abzuarbeitenden Softwarebausteine sind dabei bevorzugt objektorientiert ausgebildet. Das Softwarebaustein-Ablaufsystem bzw. Betriebssystem ist zur Einbindung der objektorientiert programmierten Softwarebausteine in das Steuerprogramm ausgebildet. Dabei kann der HTTP-Server 24, 27 ebenfalls durch einen derartigen Softwarebaustein gebildet werden, wobei für eine Datenübertragung dieser Softwarebaustein von der Steuer- und/oder Auswertevorrichtung 4 aktiviert wird und entsprechende Daten vom Schweißgerät 1 empfangen oder gesendet werden können.

Das Softwarebaustein-Ablaufsystem kann dabei in einem EPROM-Speicherbaustein gespeichert sein. Diese nichtflüchtige Speichervorrichtung 53 setzt im Vergleich zu Festplatten keine magnetische Datenaufzeichnung ein, sodaß dessen Störanfälligkeit, insbesondere in starken elektromagnetischen Feldern, wie z.B. in Schweißfeldern, sehr gering ist. Ebenso können Zwischenergebnisse bzw. die Prozeßdaten des Schweißgerätes 1 in einer als RAM-Speicher und/oder EEPROM-Speicher ausgebildeten Speichervorrichtung 53 abgelegt werden.

Das von der Steuer- und/oder Auswertevorrichtung 4 zu verarbeitende Steuerprogramm ist bevorzugt mit einer Programmiersprache erstellt, welche speziell für Netzwerkanwendungen konzipiert ist. Das Steuerprogramm bzw. deren Softwarebausteine sind dabei bevorzugt mit der Quellsprache JAVA erstellt. Zur Übersetzung des JAVA-Quellcodes ist der Steuerund/oder Auswertevorrichtung 4 bzw. der Recheneinheit 35 des Schweißgerätes 1 ein JAVA-Interpreter zugeordnet. Dieser JAVA-Interpreter übersetzt den JAVA-Quellcode in die von der Zielhardware, also von der Steuer- und/oder Auswertevorrichtung 4, verarbeitbare Form.

Gegebenenfalls kann der Prozessor der Steuer- und/oder Auswertevorrichtung 4 bzw. der Recheneinheit 35 durch einen JAVA-Prozessor gebildet sein, der das in JAVA erstellte Steuerprogramm direkt verarbeitet.

Wie am besten aus Fig. 1 ersichtlich ist, kann die Kommunikationsschnittstelle 23 des Schweißgerätes 1 auch durch eine drahtlose Kommunikationsschnittstelle 23 gebildet sein. Diese drahtlose Kommunikationsschnittstelle 23 des Schweißgerätes 1 ist dabei zur Kommunikation mit einem Mobiltelefon 60 ausgebildet, wie dies zuvor bereits erläutert wurde. Die Kommunikationsschnittstelle 23 ist dabei bevorzugt durch eine Infrarotschnittstelle 61 zur Übertragung und/oder zum Empfangen von die jeweiligen Daten repräsentierenden Infrarotsignalen 62 ausgebildet. Die als Infrarotschnittstelle 61 ausgebildete Kommunikationsschnittstelle 23 ist derart ausgebildet, daß diese mit dem Mobiltelefon 60, insbesondere mit einer Infrarotschnittstelle 63 des Mobiltelefons 60, in Verbindung treten kann. Zwischen der Infrarotschnittstelle 61 des Schweißgerätes 1 und der Infrarotschnittstelle 63 des Mobiltelefons 60 kann dabei eine bidirektionale oder auch nur eine unidirektionale Datenübertragungsstrecke 64 aufgebaut sein, über welche die jeweiligen Daten in Form von Infrarotsignalen 62 übertragen werden. Selbstverständlich ist es möglich, daß das Mobiltelefon 60 oder ein Funkmodem direkt in das Schweißgerät 1 eingebaut sein kann, sodaß jederzeit und an jedem beliebigen Ort ein Verbindungsaufbau durchgeführt werden kann, ohne das dazu weitere Elemente, wie Verbindungskabeln oder ein zusätzliches Mobiltelefon 60, benötigt werden.

Die Anbindung des Schweißgerätes 1 in das übergeordnete Netzwerk 25 erfolgt dann über das Mobiltelefon 60, indem über dieses eine Wählverbindung über das öffentliche oder ein privates Telefonnetz mit dem jeweiligen Kommunikationssendegerät bzw. Kommunikationspartner aufgebaut wird. Dabei ist es auch möglich, daß ein direkter Verbindungsaufbau mit einem Kommunikationspartner ohne übergeordnetes Netzwerk 25 stattfinden kann, wobei dazu eine Datenverbindung zwischen den beiden HTTP-Server 24 und 27 aufgebaut wird.

Die jeweiligen Schweißprozeßdaten, Parametrierungsdaten bzw. Softwarebausteine werden sodann über elektromagnetische Wellen 65, welche vom Mobiltelefon 60 abstrahlbar bzw. empfangbar wird, übertragen. Die Übertragung der Daten zwischen dem Mobiltelefon 60 und dem jeweiligen Kommunikationssendegerät bzw. Kommunikationspartner kann dabei wie an sich bekannt sehr weitläufig erfolgen.

Der Verbindungsaufbau zwischen dem Mobiltelefon 60 und dem Kommunikationssendegerät bzw. Kommunikationspartner wird bevorzugt manuell vom Bediener des Schweißgerätes 1 eingeleitet, indem dieser die Wählverbindung über das Tasteneingabefeld des Mobiltelefons 60 herstellt. Die Wählverbindung kann dabei wahlweise zu einem Servicedienst, zu Betriebsmittellieferanten, zu Wissensdatenbanken 59, zu Schweißdatenbanken mit den jeweiligen Schweißeinstellungen für die vorgesehene Schweißung und dgl. aufgebaut werden.

Selbstverständlich ist es auch möglich, anstelle des Mobiltelefons 60 eine stationäre, fix in das Schweißgerät 1 installierte Sende- und/oder Empfangseinheit 66 zum Senden und/oder Empfangen elektromagnetischer Wellen 65 anzuordnen.

Wie vor allem aus Fig. 4 ersichtlich ist, kann auch eine Programmier- und/oder Datensichtvorrichtung 67 wahlweise mit dem Schweißgerät 1 verbunden werden bzw. mit diesem über das Netzwerk 25 in Verbindung treten. Diese Programmier- und/oder Datensichtvorrichtung 67 ist zur Dateneingabe in das Schweißgerät 1 und/oder zur Datenausgabe und Visualisierung von Daten aus dem Schweißgerät 1 ausgebildet. Diese Programmier- und/oder Datensichtvorrichtung 67 ist auch in das übergeordnete Netzwerk 25 einbindbar, sodaß beispielsweise über das INTERNET 34 gezielt ein bestimmtes Schweißgerät 1 anhand dessen Adresse 52 selektiert und angesprochen werden kann. Die als eigenständige Baueinheit ausgebildete Programmier- und/oder Datensichtvorrichtung 67 kann aber auch direkt mit dem Schweißgerät 1 über die Kommunikationsschnittstelle 23 verbunden werden. Zudem kann die Programmierund/oder Datensichtvorrichtung 67 auch als Fehlerauslese- und/oder Wartungsgerät verwendet werden.

Der Ordnung halber sei abschließend darauf hingewiesen, daß zum besseren Verständnis des Aufbaus des Schweißgerätes dieses bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2, 3, 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Schweißgerät
- 2: Stromquelle
- 3: Leistungsteil
- 4: Steuer- und/oder Auswertevorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Kommunikationsschnittstelle
- 24: HTTP-Server
- 25: Netzwerk

- 26: Personal-Computer
- 27: HTTP-Server
- 28: Netzwerkkabel
- 29: Netzwerkschnittstelle
- 30: Netzwerkdose

- 31: Netzwerk (LAN)
- 32: Netzwerk (WAN)
- 33: INTRANET
- 34: INTERNET
- 35: Recheneinheit

- 36: Personal-Computer
- 37: Netzwerkteilnehmer
- 38: Einsatzstandort
- 39: Einsatzstandort
- 40: Einsatzstandort

- 41: Einsatzstandort
- 42: Einsatzstandort
- 43: Einsatzstandort
- 44: Personal-Computer
- 45: Datenspeichervorrichtung

- 46: Datensichtgerät
- 47: Automatisierungsgerät
- 48: Feldbussystem
- 49: Sensoranordnung
- 50: Datenschutzvorrichtung

- 51: Zugangseinrichtung
- 52: Adresse
- 53: Speichervorrichtung
- 54: Ankoppelvorrichtung
- 55: Modem

- 56: Netzwerkkarte
- 57: Eingabevorrichtung
- 58: Ausgabevorrichtung
- 59: Wissensdatenbank
- 60: Mobiltelefon

- 61: Infrarotschnittstelle
- 62: Infrarotsignal
- 63: Infrarotschnittstelle
- 64: Datenübertragungsstrecke
- 65: Wellen (elektromagnetisch)

- 66: Sende- und/oder Empfangseinheit
- 67: Programmier- und/oder Datensichtvorrichtung

## Patentansprüche

1. Schweißgerät (1) mit einer Stromquelle (2) zur Bereitstellung elektrischer Energie an zumindest einer Elektrode und einer der Stromquelle (2) zugeordneten Steuer- und/oder Auswertevorrichtung (4), der eine Eingabevorrichtung (57) zur Einstellung unterschiedlicher Schweißparameter zugeordnet ist, wobei eine mit der Steuer- und/oder Auswertevorrichtung (4) verbundene Kommunikationsschnittstelle (23) für einen bidirektionalen Datenaustausch zwischen dem Schweißgerät (1) oder der Stromquelle (2) mit einer externen Komponente angeordnet ist, und mit einer Sensoranordnung (49) zur Erfassung von Schweißprozeßdaten, sowie mit einer Speichervorrichtung (53) zum allfälligen vorübergehenden Speichern von Schweißprozessdaten, **dadurch gekennzeichnet, dass** der Datenaustausch über einen im Schweißgerät (1) oder der Stromquelle (2) integrierten HTTP-Server (24, 27) erfolgt, wobei der HTTP-Server (24, 27) zur Verbindung zu einem übergeordneten Netzwerk (25), rämlich zum Internet (34) und/oder zu einem Intranet (33) ausgebildet ist, sodass die Schweißprozessdaten zwischen weiteren HTTP-Servern (24, 27) im Netzwerk (25) ausgetauscht werden können, und dabei dem Schweißgerät (1) eine eindeutig unterscheidbare Kennung bzw. Adresse (52) zugeordnet ist, sodass das Schweißgerät (1) aus einer Mehrzahl von Schweißgeräten gezielt ansprechbar bzw. adressierbar ist und zusätzlich selbst eindeutig identifiziert ist, dass die Steuer- und/oder Auswertevorrichtung (4) durch eine Software-Bausteine eines Steuerprogrammes abarbeitende sowie die empfangenen Daten und/oder die auszusendenden Daten ver- bzw. bearbeitende Recheneinheit (35) gebildet ist, und der HTTP-Server (24, 27) durch einen derartigen Softwarebaustein gebildet ist, welcher von der Steuer- und/oder Auswertevorrichtung (4) aktivierbar ist, wobei über die Sensoranordnung (49) Daten betreffend die Betriebsmittel des Schweißgerätes (1), wie z.B. die Menge und/oder die Art der Schweißelektrode, des abschmelzenden Schweißdrahtes (13), des verwendeten Schutzgases und dgl., ausgehend von den Steuer- und/oder Auswertevorrichtung (4) automatisch an weitere Netzwerkteilnehmer (37) zum Auswertung und Entscheidung der Einleitung von Maßnahmen übertragbar sind, wobei über die Sensoranordnung (49) Daten betreffend Verschleißteile des Schweißgerätes (1), wie z.B. der Kontaktbuchse, der Gasdüse oder dgl., über das Netzwerk (25) und die Kommunikationsschnittstelle (23) gezielt abfragbar bzw. auch zyklisch oder erst vor Erreichen eines kritischen Zustandes an weitere Netzwerkteilnehmer (37) übertragbar sind, und von der Steuer- und/oder Auswertevorrichtung (4) Serviceempfehlungen oder Soll-Servicezeitpunkte bzw. auch konkrete Serviceanforderungen und automatisch Meldungen über den Betriebsmittelstand oder auch konkrete Betriebsmittelbestellungen an bestimmte Netzwerkteilnehmer (37), wie z.B. an einen Gas- oder Schweißdrahtlieferanten, absetzbar sind.

2. Schweißgerät nach Anspruch 1, **dadurch gekennzeichnet, dass** die Kommunikationsschnittstelle (23) durch eine TCP/IP-Schnittstelle gebildet ist, die eine Kommunikation nach dem TCP/IP-Protokoll ermöglicht.

3. Schweißgerät nach Anspruch 1 oder 2, **dadurch gekennzeichnet, dass** die Software-Funktionsbausteine über das lokale Netzwerk (31), nämlich das Intranet (33) und/oder über das globale Netzwerk (32), nämlich das Internet (34), in die Steuer- und/oder Auswertevorrichtung (4) ladbar sind.

4. Schweißgerät nach einem oder mehreren der Ansprüche 1 bis 3, **dadurch gekennzeichnet, dass** das Schweißgerät (1) eine standardisierte Schnittstelle aufweist, über die das Schweißgerät (1) mit einer Ankoppelvorrichtung (54) mit dem Netzwerk (25), insbesondere über ein Modem (55) oder eine Netzwerkkarte (56) verbindbar ist.

5. Schweißgerät nach einem oder mehreren der Ansprüche 1 bis 4, **dadurch gekennzeichnet, dass** im Schweißgerät (1) ein Modem (55) zur Verbindung mit dem übergeordneten Netzwerk (25)
vorgesehen ist.

6. Schweißgerät nach einem oder mehreren der Ansprüche 1 bis 5, **dadurch gekennzeichnet, dass** Daten zu Schweißprrozessen und/oder Kennungen zur wahlweisen Konfiguration des Schweißgerätes (1) extern in dieses zuführbar und/oder von diesem ladbar sind.

7. Schweißgerät nach einem oder mehreren der Ansprüche 1 bis 6, **dadurch gekennzeichnet, dass** Daten betreffend den Betrieb des Schweißgerätes (1), wie z.B. Verwendungsdauer, Verwendungszeitpunkte, Schweißeinstellungen und dgl., von zumindest einem weiteren Netzwerkteilnehmer (37) abfragbar sind und/oder zyklisch an weitere Netzwerkteilnehmer (37) übertragbar sind.

8. Schweißgerät nach einem oder mehreren der Ansprüche 1 bis 7, **dadurch gekennzeichnet, dass** die Eingabevorrichtung (57) zur Bedienung des Schweißgerätes (1) und/oder zur Navigation und Selektion von Daten aus dem Datenbestand einer Wissensdatenbank (59) für die Schweißtechnik ausgebildet ist.

9. Schweißgerät nach einem oder mehreren der Ansprüche 1 bis 8, **dadurch gekennzeichnet, dass** die Eingabevorrichtung (57) durch eine Tastatur, ein Zeigegerät, ein knüppelartiges Steuerorgan oder durch mehrere Bedienelemente in Form von Dreh- und/oder Schiebeelementen mit Tast- und/oder Schaltfunktion gebildet ist.

10. Schweißgerät nach einem oder mehreren der Ansprüche 1 bis 9, **dadurch gekennzeichnet, dass** die von der Steuer- und/oder Auswertevorrichtung (4) verwalteten und/oder die über die Eingabevorrichtung (57) eingegebenen und/oder die aus dem übergeordneten Netzwerk (25) abgerufenen Daten an einer dem Schweißgerät (1) zugeordneten Ausgabevorrichtung (58) visualisierbar und/oder signalisierbar sind.

11. Schweißgerät nach einem oder mehreren der Ansprüche 1 bis 10, **dadurch gekennzeichnet, dass** die Steuer- und/oder Auswertevorrichtung (4) einen Personal-Computer (26, 36) umfasst, dem eine optische Ausgabevorrichtung (58), insbesondere ein Bildschirm, zugeordnet ist.

12. Schweißgerät nach einem oder mehreren der Ansprüche 1 bis 11, **dadurch gekennzeichnet, dass** die Software-Bausteine objektorientiert ausgebildet sind.

13. Schweißgerät nach Anspruch 12, **dadurch gekennzeichnet, dass** der Steuer- und/oder Auswertevorrichtung (4) ein Software-Baustein-Ablaufsystem bzw. Betriebssystem zur Einbindung der objektorientierten Software-Bausteine und zur Verarbeitung des Steuerprogramms zugeordnet ist.

14. Schweißgerät nach einem oder mehreren der Ansprüche 1 bis 13, **dadurch gekennzeichnet, dass** die Steuer- und/oder Auswertevorrichtung (4) zur zyklischen und/oder interruptgesteuerten Bearbeitung der Software-Bausteine ausgebildet ist.

15. Schweißgerät nach einem oder mehreren der Ansprüche 1 bis 14, **dadurch gekennzeichnet, dass** die Software-Bausteine mit der Quellsprache JAVA erstellt sind.

16. Schweißgerät nach Anspruch 15, **dadurch gekennzeichnet, dass** der Steuer- und/oder Auswertevorrichtung (4) ein JAVA-Interpreter zugeordnet ist bzw. von dieser ausführbar ist.

17. Schweißgerät nach Anspruch 15 oder 16, **dadurch gekennzeichnet, dass** die Steuer- und/oder Auswertevorrichtung (4) mit einem JAVA-Prozessor versehen ist.

18. Schweißgerät nach einem oder mehreren der vorhergehenden Ansprüche, **dadurch gekennzeichnet, daß** die Kommunikationsschnittstelle (23) zum Aufbau einer drahtlosen Datenübertragungsstrecke (64) zum gewünschten Kommunikationsendegerät bzw. Kommunikationspartner ausgebildet ist.

19. Schweißgerät nach einem oder mehreren der vorhergehenden Ansprüche, **dadurch gekennzeichnet, dass** die Kommunikationsschnittstelle (23) durch eine Infrarotschnittstelle (61, 63) zur Übertragung und/oder zum Empfangen von Infrarotsignalen (62) zwischen dem Schweißgerät (1) und einem Mobiltelefon (60) ausgebildet ist.

20. Schweißgerät nach Anspruch 19, **dadurch gekennzeichnet, dass** die Infrarotschnittstelle (61) des Schweißgerätes (1) für einen Verbindungsaufbau mit einer Infrarotschnittstelle (63) des Mobiltelefons (60) ausgebildet ist.

21. Schweißgerät nach einem oder mehreren der vorhergehenden Ansprüche, **dadurch gekennzeichnet, dass** die Kommunikationsschnittstelle (23) zur direkten oder indirekten Verbindung über das Netzwerk (25) mit einer als eigenständige Baueinheit ausgebildeten Programmier- und/oder Datensichtvorrichtung (67) ausgebildet ist.

22. Verfahren zum Betreiben eines Schweißgerätes (1) mit einer von einer Steuer- und/oder Auswertevorrichtung (4) gesteuerten Energiequelle zur Beaufschlagung von zumindest einer Elektrode mit elektrischer Energie, wobei Schweißprozessdaten erfasst und allenfalls zwischengespeichert werden, wobei die Steuer- und/oder Auswertevorrichtung (4) Software-Bausteine verarbeitet und gemäß den **dadurch** vorgegebenen Anweisungen sowie anhand vorliegender Einstellungen operiert, wobei das Schweißgerät (1) über eine Kommunikationsschnittstelle (23) einen bidirektionalen Datenaustausch mit einer externen Komponente durchführt, **dadurch gekennzeichnet, dass** der Datenaustausch über einen im Schweißgerät (1) integrierten HTTP-Server (24, 27) und ein übergeordnetes Netzwerk (25), nämlich das Internet (34) und/oder ein Intranet (33), zu weiteren HTTP-Servern (24, 27) erfolgt, und dabei dem Schweißgerät (1) eine eindeutig unterscheidbare Kennung bzw. Adresse (52) zugeordnet wird, sodass das Schweißgerät aus einer Mehrzahl von Schweißgeräten (1) gezielt ansprechbar bzw. adressierbar ist und zusätzlich selbst eindeutig identifiziert ist, dass die Steuer- und/oder Auswertevorrichtung (4) durch eine Software-Bausteine eines Steuerprogrammes abarbeitende sowie die empfangenen Daten und/oder die auszusendenden Daten ver- bzw. bearbeitende Recheneinheit (35) gebildet wird, und der HTTP-Server (24, 27) durch einen derartigen Softwarebaustein gebildet wird, welcher von der Steuer- und/oder Auswertevorrichtung (4) aktiviert wird, wobei über die Sensoranordnung (49) Daten betreffend die Betriebsmittel des Schweißgerätes (1), wie z.B. die Menge und/oder die Art der Schweißelektrode, des abschmelzenden Schweißdrahtes (13), des verwendeten Schutzgases und dgl., ausgehend von der Steuer- und/oder Auswertevorrichtung (4) automatisch an weitere Netzwerkteilnehmer (37) zur Auswertung und zur Entscheidung der Einleitung von Maßnahmen übertragen werden, wobei über die Sensoranordnung (49) Daten betreffend Verschleißteile des Schweißgerätes (1), wie z.B. der Kontaktbuchse, der Gasdüse oder dgl., über das Netzwerk (25) und die Kommunikationsschnittstelle (23) gezielt abgefragt bzw. auch zyklisch oder erst vor Erreichen eines kritischen Zustandes an weitere Netzwerkteilnehmer (37) übertragen werden, und von der Steuer- und/oder Auswertevorrichtung (4) Serviceempfehlungen oder Soll-Servicezeitpunkte bzw. auch konkrete Serviceanforderuncien und automatisch Meldungen über den Betriebsmittelstand oder auch konkrete Betriebsmittelbestelluncren an bestimmte Netzwerkteilnehmer (37), wie z.B. an einen Gas- oder Schweißdrahtlieferanten, abgesetzt werden.

23. Verfahren nach Anspruch 22, **dadurch gekennzeichnet, dass** die von der Steuer- und/oder Auswertevorrichtung (4) abzuarbeitenden Software-Bausteine durch über das Netzwerk (25) übertragene Kennungen festgelegt werden.

24. Verfahren nach einem oder mehreren der Ansprüche 22 oder 23, **dadurch gekennzeichnet, dass** die Steuer- und/oder Auswertevorrichtung (4) einen Schweißprozeß kontrolliert und die dabei ermittelten Daten an weitere Netzwerkteilnehmer (37) übergeben werden können.

25. Verfahren nach einem oder mehreren der Ansprüche 22 bis 24, **dadurch gekennzeichnet, dass** die Daten oder Software-Bausteine über ein lokales Netzwerk (31), nämlich in Form eines Intranet (33), und/oder ein globales Netzwerk (32), nämlich das Internet (34) geladen und/oder übertragen werden.

## Claims

1. A welding device (1) including a current source (2) for supplying electrical energy to at least one electrode and a control and/or evaluation unit (4) associated with the current source (2) and having an associated input device (57) for setting various welding parameters, wherein a communications interface (23) connected to the control and/or evaluation unit (4) is arranged for a two-way data exchange between the welding device (1) or the current source (2) and an external component, and including a sensor system (49) for acquiring welding process data as well as a memory device (53) for the possible temporary storage of welding process data, **characterised in that** the data exchange occurs via a HTTP server (24, 27) integrated in the welding device (1) or in the current source (2), the HTTP server (24, 27) being configured for connection to a primary network (25), namely the internet (34) and/or an intranet (33), so that the welding process data can be exchanged between further HTTP servers (24, 27) in the network (25) while the welding device (1) is assigned a unique identification and/or address (52) such that the welding device (1), among a plurality of welding devices, is selectively activatable or addressable and, in addition, is itself uniquely identified, that the control and/or evaluation device (4) is formed by a computer unit (35) executing software modules of a control program and processing the received data and/or the data to be transmitted, and the HTTP server (24, 27) is formed by a software module which is activatable by the control and/or evaluation device (4), wherein, via the sensor arrangement (49), data relating to the operating means of the welding device (1), such as the amount and/or type of welding electrode(s), consumable melting wire (13), used protective gas and the like, are automatically transmittable to further network participants (37) for evaluation and the decision to initiate measures, departing from the control and/or evaluation device (4), wherein, via the sensor arrangement (49), data relating to wear parts of the welding device (1), such as the contact sleeve, the gas nozzle or the like, are selectively retrievable via the network (25) and the communications interface (23) and/or also transmittable to further network participants (37) either cyclically or only before reaching a critical state, and that service recommendations or required service times and even concrete service demands, and automatic messages concerning the state of the operating means or even concrete operating means orders, are transmittable by the control and/or evaluation device (4) to given network participants (37) such as a gas or welding wire supplier.

2. A welding device according to claim 1, **characterised in that** the communications interface (23) is formed by a TCP/IP interface which enables communication according to the TCP/IP protocol.

3. A welding device according to claim 1 or 2, **characterised in that** the software function modules are loadable into the control and/or evaluation unit (4) via the local area network (31), namely the intranet (33), and/or the global network (32), namely the internet (34).

4. A welding device according to any one or several of claims 1 to 3, **characterised in that** the welding device (1) includes a standardised interface, via which the welding device (1) is connectable to the network (25) by a coupling device (54) and, in particular, by a modem (55) or a network card (56).

5. A welding device according to one or several of claims 1 to 4, **characterised in that** a modem (55) is provided in the welding device (1) for connection to the primary network (25).

6. A welding device according to one or several of claims 1 to 5, **characterised in that** data regarding welding processes and/or identifications for the facultative configuration of the welding device (1) can be externally supplied into and/or loaded from the same.

7. A welding device according to one or several of claims 1 to 6, **characterised in that** data relating to the operation of the welding device (1), such as the duration of use, times of use, welding settings and the like, are retrievable by at least one further network participant (37) and/or cyclically transmittable to further network participants (37).

8. A welding device according to one or several of claims 1 to 7, **characterised in that** the input device (57) is configured for the operation of the welding device (1) and/or the navigation and selection of data from the data files of a knowledge database (59) for welding technology.

9. A welding device according to one or several of claims 1 to 8, **characterised in that** the input device (57) is formed by a keyboard, a pointer device, a stick-like control member or by several operating elements in the form of rotary and/or slide elements with keying and/or switching functions.

10. A welding device according to one or several of claims 1 to 9, **characterised in that** the data managed by the control and/or evaluation unit (4) and/or input via the input device (57) and/or retrieved from the primary network (25) can be visualized and/or signalized on an output device (58) associated to the welding device (1).

11. A welding device according to one or several of claims 1 to 10, **characterised in that** the control and/or evaluation unit (4) comprises a personal computer (26, 36) with an associated optical output device (58), in particular monitor.

12. A welding device according to one or several of claims 1 to 11, **characterised in that** the software modules are configured to be object-oriented.

13. A welding device according to claim 12, **characterised in that** the control and/or evaluation unit (4) has an associated software module sequencing system or operating system for the integration of the object-oriented software modules and the processing of the control program.

14. A welding device according to one or several of claims 1 to 13, **characterised in that** the control and/or evaluation unit (4) is configured for the cyclical and/or interrupt-controlled processing of the software modules.

15. A welding device according to one or several of claims 1 to 14, **characterised in that** the software modules are written in JAVA source language.

16. A welding device according to claim 15, **characterised in that** the control and/or evaluation unit (4) has an associated JAVA interpreter or is executable by the same.

17. A welding device according to claim 15 or 16, **characterised in that** the control and/or evaluation unit (4) is provided with a JAVA processor.

18. A welding device according to one or several of the preceding claims, **characterised in that** the communications interface (23) is configured for setting up a wireless data transmission route (64) to the desired communication transmitter or communication partner.

19. A welding device according to one or several of the preceding claims, **characterised in that** the communications interface (23) is formed by an infrared interface (61, 63) for the transmission and/or reception of infrared signals (62) between the welding device (1) and a mobile phone (60).

20. A welding device according to claim 19, **characterised in that** the infrared interface (61) of the welding device (1) is configured for setting up a connection with an infrared interface (63) of the mobile phone (60).

21. A welding device according to one or several of the preceding claims, **characterised in that** the communications interface (23) is configured for the direct or indirect connection via the network (25) with a programming and/or data display unit (67) provided as an independent unit.

22. A method for operating a welding device (1) including an energy source controlled by a control and/or evaluation unit (4) for supplying electrical energy to at least one electrode, wherein welding process data are acquired and, if necessary, intermediately stored, wherein the control and/or evaluation unit (4) processes software modules and operates according to the instructions given thereby as well as by way of actual settings, wherein the welding device (1) carries out a two-way data exchange with an external component via a communication interface (23), **characterised in that** the data exchange, via a HTTP server (24, 27) integrated in the welding device (1) and a primary network (25), namely the internet (34) and/or an intranet (33), is effected to further HTTP servers (24, 27), while the welding device (1) is assigned a unique identification and/or address (52) such that the welding device (1), among a plurality of welding devices, is selectively activatable or addressable and, in addition, is itself uniquely identifiable, that the control and/or evaluation device (4) is formed by a computer unit (35) executing software modules of a control program and processing the received data and/or the data to be transmitted, and the HTTP server (24, 27) is formed by a software module which is activatable by the control and/or evaluation device (4), wherein, via the sensor arrangement (49), data relating to the operating means of the welding device (1), such as the amount and/or type of welding electrode(s), consumable melting wire (13), used protective gas and the like, are automatically transmitted to further network participants (37) for evaluation and the decision as to whether to start taking measures, departing from the control and/or evaluation device (4), and wherein, via the sensor arrangement (49), data relating to wear parts of the welding device (1) such as the contact sleeve, the gas nozzle or the like, are selectively retrieved via the network (25) and the communications interface (23) and/or also transmitted to further network participants (37) either cyclically or only before reaching a critical state, and that service recommendations or required service times and even concrete service demands, and automatic messages concerning the state of the operating means or even concrete operating means orders, are transmitted by the control and/or evaluation device (4) to given network participants (37) such as a gas or welding wire supplier.

23. A method according to claim 22, **characterised in that** the software modules to be executed by the control and/or evaluation unit (4) are determined by identifications transmitted via the network (25).

24. A method according to one or several of claims 22 or 23, **characterised in that** the control and/or evaluation unit (4) controls a welding process and the data determined thereby can be transmitted to further network participants (37).

25. A method according to one or several of claims 22 to 24, **characterised in that** the data or software modules are loaded and/or transmitted via a local network (31), namely in the form of an intranet (33), and/or a global network (32), namely the internet (34).

## Revendications

1. Poste de soudure (1) avec une source de courant (2) pour l'amenée d'énergie électrique à au moins une électrode et à un dispositif de commande et/ou d'exploitation (4) associé à la source de courant (2) à laquelle est affecté un dispositif d'entrée (57) pour le réglage de différents paramètres de soudage, dans lequel une interface de communication (23) connectée au dispositif de commande et/ou d'exploitation (4) est installée pour un échange de données bidirectionnel entre le poste de soudure (1) ou la source de courant (2) avec un composant externe, et avec un dispositif capteur (49) pour la détection de données du procédé de soudure, ainsi qu'avec un dispositif de mémorisation (53) pour la mémorisation temporaire éventuelle de données du procédé de soudure, **caractérisé en ce que** l'échange de données se fait par l'intermédiaire d'un serveur HTTP (24, 27) intégré au poste de soudure (1) ou à la source de courant (2), moyennant quoi le serveur HTTP (24, 27) est conçu pour la connexion avec un réseau principal (25), à savoir avec l'Internet (34) et/ou avec un Intranet (33), de sorte que les données du procédé de soudure puissent être échangées entre d'autres serveurs HTTP (24, 27) dans le réseau (25) et une caractéristique ou une adresse (52) clairement différenciable est associée en l'occurrence au poste de soudure (1) de sorte que le poste de soudure (1) d'entre une pluralité de postes de soudure soit adressable de manière appropriée et soit en outre lui-même clairement identifié, **en ce que** le dispositif de commande et/ou d'exploitation (4) est formé d'une unité de calcul (35) exécutant des modules logiciels d'un programme de commande et élaborant ou transformant les données reçues et/ou les données à envoyer, et le serveur HTTP (24, 27) est formé d'un tel module logiciel qui est activable par le dispositif de commande et/ou d'exploitation (4), dans lequel, par le biais du dispositif capteur (49), des données concernant les moyens d'exploitation du poste de soudure (1), telles que la quantité et/ou le type d'électrode de soudure, du fil de soudure fondu (13), du gaz de protection employé et similaire, peuvent être transmises du dispositif de commande et/ou d'exploitation (4) automatiquement à d'autres utilisateurs de réseau (37) pour exploiter des mesures et décider de la prise de mesures, dans lequel, par le biais du dispositif capteur (49), des données concernant des pièces d'usure du poste de soudure (1), telles que la douille de contact, la buse de gaz ou similaire, peuvent être interrogées de manière adéquate via le réseau (25) et l'interface de communication (23) ou être transmises de manière cyclique ou juste avant d'atteindre un état critique à d'autres utilisateurs de réseau (37), et des recommandations d'entretien ou des dates d'entretien théoriques ou également des exigences d'entretien concrètes et des messages automatiques concernant l'état des moyens d'exploitation ou également des commandes de moyens d'exploitation concrètes peuvent être transmis par le dispositif de commande et/ou d'exploitation (4) à certains utilisateurs de réseau (37), par exemple à un fournisseur de gaz ou de fil de soudure.

2. Poste de soudure selon la revendication 1, **caractérisé en ce que** l'interface de communication (23) est formée d'une interface TCP/IP qui permet une communication suivant le protocole TCP/IP.

3. Poste de soudure selon la revendication 1 ou 2, **caractérisé en ce que** les modules fonctionnels de logiciel peuvent être chargés dans le dispositif de commande et/ou d'exploitation (4) par le réseau local (31), à savoir l'Intranet (33) et/ou par le réseau global (32), à savoir l'Internet (34).

4. Poste de soudure selon une ou plusieurs des revendications 1 à 3, **caractérisé en ce que** le poste de soudure (1) comporte une interface normalisée par l'intermédiaire de laquelle le poste de soudure (1) peut être connecté via un dispositif de couplage (54) au réseau (25), en particulier par un modem (55) ou une carte réseau (56).

5. Poste de soudure selon une ou plusieurs des revendications 1 à 4, **caractérisé en ce qu'**un modem (55) est prévu dans le poste de soudure (1) pour la connexion avec le réseau principal (25).

6. Poste de soudure selon une ou plusieurs des revendications 1 à 5, **caractérisé en ce que** des données sur les procédés de soudure et/ou des caractéristiques pour la configuration sélective du poste de soudure (1) peuvent être acheminées extérieurement dans celui-ci et/ou être chargées par celui-ci.

7. Poste de soudure selon une ou plusieurs des revendications 1 à 6, **caractérisé en ce que** des données concernant le fonctionnement du poste de soudure (1), comme la durée d'utilisation, les dates d'utilisation, les réglages de soudage et similaires peuvent être interrogées par au moins un autre utilisateur de réseau (37) et/ou être transmises cycliquement à d'autres utilisateurs de réseau (37).

8. Poste de soudure selon une ou plusieurs des revendications 1 à 7, **caractérisé en ce que** le dispositif d'entrée (57) est conçu pour la commande du poste de soudure (1) et/ou pour la navigation et la sélection de données à partir du stock de données d'une banque de données scientifiques (59) pour la technique de soudage.

9. Poste de soudure selon une ou plusieurs des revendications 1 à 8, **caractérisé en ce que** le dispositif d'entrée (57) est constitué d'un clavier, d'un dispositif de pointage, d'un organe de commande en forme de levier ou de plusieurs éléments de commande sous forme d'éléments rotatifs et/ou coulissants avec une fonction de frappe et/ou de commutation.

10. Poste de soudure selon une ou plusieurs des revendications 1 à 9, **caractérisé en ce que** les données gérées par le dispositif de commande et/ou d'exploitation (4) et/ou les données saisies par le dispositif d'entrée (57) et/ou les données interrogées sur le réseau principal (25) peuvent être visualisées et/ou signalisées sur un dispositif de sortie optique (58) associé au poste de soudure (1).

11. Poste de soudure selon une ou plusieurs des revendications 1 à 10, **caractérisé en ce que** le dispositif de commande et/ou d'exploitation (4) comprend un ordinateur personnel (26, 36) auquel est associé un dispositif de sortie optique (58), en particulier un écran.

12. Poste de soudure selon une ou plusieurs des revendications 1 à 11, **caractérisé en ce que** les modules logiciels sont conçus pour être orientés objets.

13. Poste de soudure selon la revendication 12, **caractérisé en ce qu'**un système d'exécution de modules logiciels ou un système d'exploitation est associé au dispositif de commande et/ou d'exploitation (4) pour l'intégration des modules logiciels orientés objets et pour le traitement du programme de commande.

14. Poste de soudure selon une ou plusieurs des revendications 1 à 13, **caractérisé en ce que** le dispositif de commande et/ou d'exploitation (4) est conçu pour le traitement cyclique et/ou commandé par interruption des modules de logiciel.

15. Poste de soudure selon une ou plusieurs des revendications 1 à 14, **caractérisé en ce que** les modules de Logiciel sont établis avec le langage source JAVA.

16. Poste de soudure selon la revendication 15, **caractérisé en ce qu'**un interpréteur JAVA est associé au dispositif de commande et/ou d'exploitation (4) ou est exécutable par celui-ci.

17. Poste de soudure selon la revendication 15 ou 16, **caractérisé en ce que** le dispositif de commande et/ou d'exploitation (4) est équipé d'un processeur JAVA.

18. Poste de soudure selon une ou plusieurs des revendications précédentes, **caractérisé en ce que** l'interface de communication (23) est conçue pour l'établissement d'un chemin de transmission de données (64) sans fil vers l'émetteur de communication ou le partenaire de communication souhaité.

19. Poste de soudure selon une ou plusieurs des revendications précédentes, **caractérisé en ce que** l'interface de communication (23) est formée d'une interface infrarouge (61, 63) pour la transmission et/ou pour la réception de signaux infrarouges (62) entre le poste de soudure (1) et un téléphone portable (60).

20. Poste de soudure selon la revendication 19, **caractérisé en ce que** l'interface infrarouge (61) du poste de soudure (1) est conçue pour l'établissement d'une liaison avec une interface infrarouge (63) du téléphone portable (60).

21. Poste de soudure selon une ou plusieurs des revendications précédentes, **caractérisé en ce que** l'interface de communication (23) est conçue pour la liaison directe ou indirecte via le réseau (25) avec un dispositif de programmation et/ou de visualisation de données (67) conçu comme une unité modulaire autonome.

22. Procédé pour l'exploitation d'un poste de soudure (1) avec une source d'énergie commandée par un dispositif de commande et/ou d'exploitation (4) pour l'alimentation d'au moins une électrode en énergie électrique, dans lequel les données du procédé de soudure sont saisies et éventuellement mémorisées temporairement, dans lequel le dispositif de commande et/ou d'exploitation (4) exécute des modules logiciels et opère suivant les instructions ainsi prédéterminées, ainsi qu'en fonction de réglages existants, dans lequel le poste de soudure (1) effectue un échange de données bidirectionnel avec un composant externe par l'intermédiaire d'une interface de communication (23), **caractérisé en ce que** l'échange de données se fait par le biais d'un serveur HTTP (24, 27), intégré au poste de soudure (1), et d'un réseau principal (25), à savoir l'Internet (34) et/ou un Intranet (33), vers d'autres serveurs HTTP (24, 27), et une caractéristique ou une adresse (52) clairement différenciable est associée en l'occurrence au poste de soudure (1), le poste de soudure entre une pluralité de postes de soudure (1) étant adressable de manière appropriée et étant en outre lui-même clairement identifié, **en ce que** le dispositif de commande et/ou d'exploitation (4) est formé d'une unité de calcul (35) exécutant des modules logiciels d'un programme de commande et élaborant ou transformant les données reçues et/ou les données à envoyer, et le serveur HTTP (24, 27) est formé par un tel module logiciel qui est activé par le dispositif de commande et/ou d'exploitation (4), dans lequel, par le biais du dispositif capteur (49), des données concernant les moyens d'exploitation du poste de soudure (1), telles que la quantité et/ou le type de l'électrode de soudure, du fil de soudure fondu (13), du gaz de protection employé et similaire, peuvent être transmises par le dispositif de commande et/ou d'exploitation (4) automatiquement à d'autres utilisateurs de réseau (37) pour exploiter des mesures et décider de l'engagement de mesures, dans lequel, par le biais du dispositif capteur (49), des données concernant des pièces d'usure du poste de soudure (1), telles que la douille de contact, la buse de gaz ou similaire, peuvent être interrogées de manière appropriée via le réseau (25) et l'interface de communication (23) ou être transmises de manière cyclique ou juste avant d'atteindre un état critique à d'autres utilisateurs de réseau (37), et des recommandations d'entretien ou des dates d'entretien théoriques ou des exigences d'entretien concrètes et des messages automatiques concernant l'état de moyens d'exploitation ou des commandes de moyens d'exploitation concrètes peuvent être transmis par le dispositif de commande et/ou d'exploitation (4) à certains utilisateurs de réseau (37), tels qu'à un fournisseur de gaz ou de fil de soudure.

23. Procédé selon la revendication 22, **caractérisé en ce que** les modules logiciels exécutés par le dispositif de commande et/ou d'exploitation (4) sont déterminés par des caractéristiques transmises par l'intermédiaire du réseau (25).

24. Procédé selon une ou plusieurs des revendications 22 ou 23, **caractérisé en ce que** le dispositif de commande et/ou d'exploitation (4) contrôle un procédé de soudure et les données ainsi déterminées peuvent être transmises à d'autres utilisateurs de réseau (37).

25. Procédé selon une ou plusieurs des revendications 22 à 24, **caractérisé en ce que** les données ou les modules logiciels sont chargés et/ou transmis par un réseau local (31), à savoir sous la forme d'un Intranet (33), et/ou un réseau global (32), à savoir l'Internet (34).
